Europäisches Patentamt

European Patent Office

Office européen des brevets

(19)

(11) Veröffentlichungsnummer: **0 062 804**
**B1**

(12) **EUROPÄISCHE PATENTSCHRIFT**

(45) Veröffentlichungstag der Patentschrift :
30.12.86

(21) Anmeldenummer : 82102497.3

(22) Anmeldetag : 25.03.82

(51) Int. Cl.⁴ : **C 01 G 39/00**, C 22 B   3/00,
C 22 B 34/34

(54) Verfahren zur Entfernung von Molybdän aus wässrigen Salzlösungen.

(30) Priorität : 10.04.81 DE 3114559

(43) Veröffentlichungstag der Anmeldung :
20.10.82 Patentblatt 82/42

(45) Bekanntmachung des Hinweises auf die Patenterteilung : 30.12.86 Patentblatt 86/52

(84) Benannte Vertragsstaaten :
BE DE FR GB

(56) Entgegenhaltungen :
CHEMICAL ABSTRACTS, Band 74, Nr. 11, 15. März
1971, Seite 459, Nr. 60149t, Columbus, Ohio, USA; G.
OZOL-KALNINS: "Adsorption purification of a manganese electrolyte by manganese dioxide"
CHEMICAL ABSTRACTS, Band 70, Nr. 25, 23. Juni
1969, Seite 470, Nr. 120757u, Columbus, Ohio, USA; S.
MELONI et al.: "Behavior of 14 radionuclides on
manganese dioxide columns"
CHEMICAL ABSTRACTS, Band 80, Nr. 12, 25. März
1974, Seite 110, Nr. 61628j, Columbus, Ohio, USA;
Die Akte enthält technische Angaben, die nach dem
Eingang der Anmeldung eingereicht wurden und die
nicht in dieser Patentschrift enthalten sind.

(73) Patentinhaber : HOECHST AKTIENGESELLSCHAFT
Postfach 80 03 20
D-6230 Frankfurt am Main 80 (DE)

(72) Erfinder : Preisler, Eberhard, Dr.
Bertolt-Brecht-Strasse 55
D-5042 Erftstadt (DE)
Erfinder : Hofmann, Bernhard, Dr.
Alleestrasse 48
D-5030 Hürth-Knapsack (DE)
Erfinder : Holzem, Johannes
Bachemerstrasse 39
D-5030 Hürth-Gleuel (DE)

## Beschreibung

Die vorliegende Erfindung betrifft ein Verfahren zur Entfernung von Molybdän aus wäßrigen Salzlösungen, insbesondere Mangansalzlösungen, durch Adsorption an Mangandioxid.

Salzlösungen, die durch Auflösen natürlich vorkommender Erze gewonnen wurden, enthalten oft als Verunreinigung Molybdän, das bei der Weiterverarbeitung dieser Lösungen oft hinderlich ist.

So wirken beispielsweise Verunreinigungen an Molybdän in Mangansalzlösungen, die aus Manganerzen zum Zwecke der Braunsteingewinnung hergestellt wurden, sehr störend, so daß diese Lösungen vor ihrer Weiterverarbeitung gereinigt werden müssen. Dies ist vor allem dann der Fall, wenn diese Mangansalzlösungen zur Erzeugung von elektrochemisch abgeschiedenem Braunstein (in der Literatur oft als EMD, elektrochemisches Mangandioxid, bezeichnet) eingesetzt werden.

Spezielle Verfahren zur Entfernung von Molybdän aus solchen Mangansalzlösungen sind bislang nicht bekannt. Üblicherweise werden aus den genannten Mangansalzlösungen die Verunreinigungen an Fremdmetallen durch Neutralisation mit Hilfe von Mangan (II)-oxid sowie Alkali- oder Erdalkalihydroxiden bzw. -carbonaten ausgefällt (zum Beispiel Eisen und Aluminium sowie teilweise Nickel, Cobalt, Kupfer, Arsen und Antimon). In einem weiteren Schritt werden dann die Lösungen mit Schwefelwasserstoff oder einem wasserlöslichen Sulfid behandelt, wodurch die restlichen Schwermetalle als Sulfide ausgefällt werden (DE-C-2 057 939). Molybdän läßt sich, auf diese Weise nicht in nennenswertem Umfang aus den Lösungen entfernen. Es sind auch analytische Untersuchungsmethoden von Seewasser bekannt, nach denen Proben von Seewasser mit Braunstein in Kontakt gebracht werden, wobei Metallionen, unter anderem auch vom Molybdän, an Braunstein adsorbiert werden. Zu diesem Zwecke wird den Seewasserproben eine Mangansulfatlösung sowie Bromwasser im Überschuß zugegeben und dadurch Braunstein in allerfeinster Verteilung ausgefällt oder frisch gefällter Braunstein in die Proben eingetragen und nach der Adsorption abfiltriert. Diese analytischen Methoden lassen sich nicht auf Prozesse übertragen, die im großtechnischen Maßstab durchgeführt werden.

Chemisch gefällter Braunstein besitzt zwar eine große spezifische Oberfläche, ist aber sehr feinteilig und verfügt über keine nennenswerte Druckfestigkeit. Er ist daher nur in ganz geringen Schütthöhen verwendbar und somit können nur ganz geringe Durchströmungsgeschwindigkeiten pro Schüttbettquerschnittseinheit erzielt werden (siehe Beispiel 4).

Wesentlich grobkörniger und druckfester ist natürlich vorkommender Pyrolusit, der aber praktisch keine Adsorptionsfähigkeit für Molybdän besitzt. Aufgabe der vorliegenden Erfindung war es, ein großtechnisch einfach durchführbares Verfahren zu finden, um aus wäßrigen Salzlösungen, insbesondere aus Mangansalzlösungen, die zur Gewinnung von Braunstein eingesetzt werden, Verunreinigungen an Molybdän zu entfernen.

Überraschenderweise wurde nun gefunden, daß sich diese Aufgabe lösen läßt, indem man die Salzlösungen mit einer Schüttung aus Mangandioxid in Kontakt bringt, das auf elektrolytischem Wege abgeschieden und in eine körnige Form gebracht worden ist. Besonders geeignet ist dafür ein $MnO_2$, das eine Körnung von 0,05 bis 5,0 mm, vorzugsweise von 0,5 bis 2,0 mm, besitzt.

Es empfiehlt sich ferner, Salzlösungen einzusetzen die einen pH-Wert kleiner als 4, vorzugsweise von 1 bis 2,5, aufweisen.

Die Schüttung aus Braunstein ist nach Erschöpfung ihrer Adsorptionsfähigkeit leicht zu regenerieren, indem man nach Ablassen der Salzlösung die Schüttung mit einer wäßrigen alkalischen Lösung behandelt und dabei das absorbierte Molybdän von ihr entfernt. Vorteilhafterweise verwendet man hierzu eine Natronlauge, deren Konzentration so eingestellt ist, daß nach Einstellung des Desorptionsgleichgewichtes, die entstehende Lösung noch mindestens 2, vorzugsweise mindestens 5 Gewichts% freie Natronlauge enthält. Das Desorptionsgleichgewicht hat sich in der Regel nach 1 bis 20 Stunden, meist nach 5 bis 10 Stunden annähernd eingestellt. Zweckmäßigerweise führt man das Verfahren, Adsorption sowie Desorption, bei Temperaturen von 20 bis 95 °C, vorzugsweise von 60 bis 80 °C, durch.

Für die Durchführung des Verfahrens haben sich säulenförmige Behälter bewährt, welche die Braunsteinschüttung in sich aufnehmen und die am Boden mit Vorrichtungen ausgestattet sind, welche ein gleichmäßiges Einströmen der Salzlösung in die Behälter und damit in die Schüttung ermöglichen. Es ist aber auch möglich, als Adsorptionsgefäße Eindicker zu verwenden, die mit Rührvorrichtungen versehen sind. In diesem Falle ist es ratsam, den Braunstein mit einer Körnung zwischen 0,05 und 0,2 mm einzusetzen.

Die hohe Druckfestigkeit des erfindungsgemäß eingesetzten Materials erlaubt es, Adsorptionssäulen mit Schüttungen bis zu mehreren Metern Höhe zu füllen, ohne daß dabei die Schüttungen ihre Durchlässigkeit für die Salzlösungen verlieren. Dies ermöglicht bei gegebenem Querschnitt einen großen Durchsatz an salzlösung pro Zeiteinheit, zumal bezüglich seiner Adsorptionsfähigkeit der elektrolytisch abgeschiedene Braunstein dem chemisch ausgefällten Braunstein nicht nachsteht.

Für die Durchführung des Verfahrens sind die verschiedensten Arten von Vorrichtungen möglich. Eine besonders geeignete Ausführungsform einer solchen Vorrichtung besteht aus zwei zylindrischen Stahltanks, die entweder aus nichtrostendem Stahl bestehen oder mit einer korrosionsverhindernden Innenauskleidung, beispielsweise aus Gummi, versehen sind. Das Verhältnis von Höhe zu Breite dieser Tanks sollte etwa 1 : 1 betragen, da zu hohe, schmale Schüttungen bei gleicher Schüttgutmenge einen entsprechend hohen Strömungswiderstand besitzen, was ungünstig ist. Andererseits kann bei zu niedriger Schütthöhe und entsprechend großem Querschnitt die Gleichmäßigkeit der Durchströmung leiden, trotz Einrichtungen die für eine gleichmäßige Verteilung bei der Aufgabe der Salzlösungen auf die Schüttung sorgen.

Jedes der beiden Adsobergefäße, die mit der gleichen Füllung versehen sind, ist mit dem anderen über Rohrleitungen und Ventile so verbunden, daß die zu reinigende Salzlösung zuerst durch das eine und dann durch das andere Gefäß strömen kann. Dazwischen befindet sich ein Ventil, aus dem Proben der Lösung entnommen werden können. Sobald nach einer gewissen Betriebszeit Analysen dieser Proben anzeigen, daß die Adsorptionsfähigkeit der Schüttung des ersten Gefäßes nahezu erschöpft ist, wird dieses Gefäß abgeschaltet und die Schüttung regeneriert. Dann wird dieses Gefäß als zweites Gefäß geschaltet, bis abermals die Probenanalyse die Erschöpfung der Schüttung des ursprünglich zweiten Gefäßes anzeigt ; und umgekehrt verfahren und so weiter. Diese Vorrichtung ist vor allem für Salzlösungen mit relativ hohen Salzkonzentrationen, die eine relativ hohe Dichte haben, geeignet. Bei verdünnten Salzlösungen empfiehlt es sich, den erfindungsgemäß eingesetzten Braunstein mit den Salzlösungen in einem Eindicker in Kontakt zu bringen, in dem die Schüttung auch langsam gerührt oder umgewälzt werden kann.

Bei der Regenerierung der Braunsteinschüttung mit Hilfe alkalischer Lösungen wird das Molybdän in Form von Alkalimolybdat von der Braunsteinoberfläche abgelöst. Zu diesem Zweck wird die Salzlösung abgelassen und die Schüttung gewaschen, bis keine nennenswerten Mengen der Salze im Waschwasser mehr nachweisbar sind. Dann wird die Schüttung mit der alkalischen Lösung, vorzugsweise einer Natronlauge einer Konzentration von mindestens 2 Gewichts%, in Kontakt gebracht.

Zur Beschleunigung der Einstellung des Desorptionsgleichgewichtes empfiehlt es sich, die alkalische Lösung, gegebenenfalls über eine Bypass-Leitung umzupumpen. Nach Ablassen der alkalischen Lösung und Spülen mit Wasser ist die Braunsteinschüttung wieder erneut einsatzfähig.

Die nachfolgenden Beispiele sollen die erfindungsgemäße Arbeitsweise verdeutlichen, ohne daß damit zum Ausdruck gebracht werden soll, daß die vorliegende Erfindung auf diese speziellen Ausführungsformen beschränkt ist. Das Gegenbeispiel 4 zeigt die technischen Nachteile auf, die bei Verwendung eines sehr feinteiligen Braunsteins wie z.B. eines chemisch gefällten Braunsteins in Kauf genommen werden müßten.

### Beispiel 1

In einem Glasrohr von 5 cm Durchmesser und einer Höhe von 50 cm befinden sich 2 kg Elektrolytbraunstein mit einer Körnung zwischen 0,5 und 1 mm (Schüttbettvolumen : 1 l). Mittels einer Dosierpumpe wird eine Mangansulfatlösung von unten in das Braunsteinschüttbett hineingepumpt. Oberhalb des Schüttbetts fließt die Lösung im freien Überlauf ab. Die Konzentration der Mangansulfatlösung ist 1,3 molar. Nach den jeweiligen mit a, b, c, und d bezeichneten Arbeitsphasen der Adsorption wird das Schüttbett in der Glassäule auf folgende Weise regeneriert : nach Ablassen der Mangansulfatlösung wird die Säule mit Wasser geflutet und dieses nach etwa 10 Minuten wieder abgelassen. Dieser Vorgang wird dreimal wiederholt. Dann werden 4 Liter einer 10 %igen Natronlauge über eine Kreisleitung 10 Stunden lang durch die Braunsteinschüttung gepumpt, anschließend wird die Lauge abgelassen und die Säule dreimal mit Wasser geflutet.

### Tabelle 1

Resultate :

| | a | b | c | d |
|---|---|---|---|---|
| pH-Wert der $MnSO_4$-Lösung | 0,5 | 2,0 | 2,1 | 2,0 |
| Temperatur der $MnSO_4$-Lösung | 20°C | 20°C | 20°C | 20°C |
| Durchsatz (1/h) | 0,92 | 0,84 | 1,5 | 1,5 |
| Kontaktzeit (Minuten) | 40 | 50 | 25 | 25 |
| Erschöpfung der Säule nach n Litern: | 110 | 200 | 2600 | 1600 |
| Gehalt an Mo vor Adsorption (mg/l) | 100 | 55 | 4,5 | 5,5 |
| Gehalt an Mo nach Adsorption (mg/l) | 6,6 | 5,0 | < 0,25 | < 0,1 |
| Reinigungsgrad (%) | 94 | 91 | > 95 | > 98 |

# 0 062 804

## Beispiel 2

In der gleichen Apparatur wie bei Beispiel 1 befindet sich EMD der Körnung 2-4 mm. Es wurde eine Mangansulfatlösung von pH 2,0 mit einem Molybdängehalt von 4 mg/l bei einer Durchlaufrate von 1,5 l/h behandelt. Nach 25 l Durchlauf betrug die Molybdänadsorption 95 %, nach 100 l jedoch nur noch 60 % und nach 200 l nur noch 50 %. ach Regenerieren der Säule lagen im 2. Adsorptionszyklus die entsprechenden Werte bei 75, 55 und 40 %.

## Beispiel 3

In einem gummierten Stahlgefäß von 60 cm Durchmesser und 100 cm Höhe befinden sich 250 kg Elektrolytbraunstein und nehmen bei einer Teilchendichte von 4 kg/l und einem Schüttgewicht von 2 kg/l ein Volumen von 175 l entsprechend einer Füllhöhe von 60 cm ein. Durch eine Bodenöffnung des Gefäßes tritt in die Braunsteinschüttung die zu reinigende Mangansalzlösung mit einer Temperatur von 70 °C ein und fließt nach Durchströmen der Schüttung aus dem Gefäß ab. Der pH-Wert der Lösung beträgt 2,5 (Tabelle 1). Das mit Deckel druckfest abgedichtete Gefäß kann wahlweise über den Mantel mit Dampf beheizt werden.

Nach Erschöpfung der Adsorptionskapazität wird die sich noch im Gefäß befindliche Mangansalzlösung abgelassen. Das Gefäß wird zweimal mit Wasser geflutet. Dann wird 25 %ige Natronlauge eingefüllt und für 16 Stunden darin belassen. Nach Ablassen der Natronlauge und erneutem zweimaligem Fluten mit Wasser ist die Schüttung für eine erneute Molybdänadsorption bereit. Für die Betriebspraxis sind zwei solche Einheiten hintereinandergeschaltet, die wechselweise regeneriert werden, sobald das jeweils vorgeschaltete Schüttbett erschöpft ist. Die in Tabelle 2 dargelegten Versuche geben die Resultate eines einzelnen Schüttbetts wieder.

## Tabelle 2

Körnung des Elektrolytbraunsteins : 2-5 mm
Füllmenge : 350 kg
Füllvolumen : 175 l ; Leervolumen der Schüttung : 87 l,
Durchsatz : 360 l/h ≙ 0,25 h Kontaktzeit
Mangankonzentration : 1,3 molar
pH-Wert der Lösung : 2,5
Molybdängehalt der Aufgabelösung : 5 mg/l

**Anfangsadsorption**

| Aufgabenmenge | $0,5 \text{ m}^3$ | $10 \text{ m}^3$ | $20 \text{ m}^3$ |
|---|---|---|---|
| Mo (mg/l) I | 0,2 | 0,7 | 2,6 |
| II | <0,1 | 0,1 | 0,5 |

**Nach der 1. Regeneration (mit 5%iger NaOH)**

| Aufgabenmenge | $5 \text{ m}^3$ | $15 \text{ m}^3$ | |
|---|---|---|---|
| Mo (mg/l) I | 0,5 | 2,5 | |
| II | 0,2 | 0,7 | |

**Nach der 2. Regeneration (mit 5%iger NaOH)**

| Aufgabenmenge | $5 \text{ m}^3$ | $15 \text{ m}^3$ | $25 \text{ m}^3$ |
|---|---|---|---|
| Mo (mg/l) I | 0,7 | 2,5 | 3,7 |
| II | 0,1 | 0,7 | 2,0 |

**Nach der 3. Regeneration (mit 25%iger NaOH)**

| Aufgabenmenge | $5 \text{ m}^3$ | $15 \text{ m}^3$ | $25 \text{ m}^3$ |
|---|---|---|---|
| Mo (mg/l) I | 0,3 | 1,2 | 1,4 |
| II | 0,1 | 0,2 | 0,7 |

(Fortsetzung)

Nach der 4. Regeneration (mit 25%iger NaOH)

| Aufgabenmenge | | 5 m³ | 15 m³ | 25 m³ |
|---|---|---|---|---|
| Mo (mg/l) | I | 0,3 | 1,4 | 2,1 |
| | II | 0,1 | 0,2 | 0,4 |

Tabelle 3

Körnung des Elektrolytbraunsteins 0,5-2 mm
Füllmenge 350 kg
Füllvolumen 180 l
Leervolumen 90 l
Durchsatz : 100 l/h $\widehat{=}$ 0,9 h Kontaktzeit
Mangankonzentration : 1,3 molar
pH-Wert der Lösung 2,5
Molybdängehalt der Aufgabelösung : 5 mg/l.

| Durchlaufvolumen: | 10 m³ | 30 m³ | 50 m³ | 70 m³ | 90 m³ |
|---|---|---|---|---|---|
| mg Mo/l | < 0,1 | < 0,1 | < 0,1 | < 0,1 | < 0,2 |

Beispiel 4

In einer Adsorptionssäule wie in Beispiel 1 befindet sich ein chemisch hergestelltes Braunsteinpulver, dessen Körnung aufgrund seiner Darstellungsweise $\leqslant$ 50 μm ist. Die Füllhöhe beträgt nur 9 cm, entsprechend einem Volumen von ~ 180 ml. Die Säule wurde mit 1.3 molarer Mangansulfatlösung beaufschlagt unter Anwendung einer Druckdifferenz von 0,1 bar. Es wurde eine Durchlaufrate von maximal 6 ml/h gemessen. Bezieht man diese Durchlaufrate auf eine Schüttung von 1 l von gleicher Schütthöhe mit einem entsprechend vergrößerten Querschnitt, so wäre die Durchlaufrate 0.033 l/h. Die vergleichbare Durchlaufrate bei Versuch 1 betrug mehr als 1.5 l/h.
Der Molybdängehalt der auslaufenden Lösung war < 0,1 mg/l.

**Patentansprüche**

1. Verfahren zur Entfernung von Molybdän aus wäßrigen Salzlösungen durch Adsorption an Mangandioxid, dadurch gekennzeichnet, daß man die Salzlösung mit einer Schüttung aus Mangandioxid ($MnO_2$) in Kontakt bringt, das auf elektrolytischem Wege abgeschieden und in eine körnige Form gebracht worden ist.

2. Verfahren nach Anspruch 1, dadurch gekennzeichnet, daß das $MnO_2$ eine Körnung von 0,05 bis 5 mm besitzt.

3. Verfahren nach Anspruch 2, dadurch gekennzeichnet, daß das $MnO_2$ eine Körnung von 0,5 bis 2 mm besitzt.

4. Verfahren nach einem der Ansprüche 1 bis 3, dadurch gekennzeichnet, daß die Salzlösung einen pH-Wert kleiner als 4 aufweist.

5. Verfahren nach Anspruch 4, dadurch gekennzeichnet, daß die Salzlösung einen pH-Wert von 1 bis 2,5 aufweist.

6. Verfahren nach einem der Ansprüche 1 bis 5, dadurch gekennzeichnet, daß die Schüttung aus $MnO_2$ nach Erschöpfung ihrer Adsorptionskapazität regeneriert wird, indem man nach Ablassen der Salzlösung die Schüttung mit einer wäßrigen alkalischen Lösung behandelt und dabei das adsorbierte Molybdän von ihr entfernt.

7. Verfahren nach Anspruch 6, dadurch gekennzeichnet, daß man zur Regenerierung der Schüttung eine Natronlauge einsetzt, deren Konzentration so eingestellt ist, daß, nach Einstellung des Desorptionsgleichgewichts, die entstehende Lösung noch mindestens 2 Gewichts%, vorzugsweise mindestens 5 Gewichts% freie Natronlauge enthält.

8. Verfahren nach einem der Ansprüche 1 bis 7, dadurch gekennzeichnet, daß man das Verfahren bei Temperaturen von 20 bis 95 °C durchführt.

9. Verfahren nach Anspruch 8, dadurch gekennzeichnet, daß man das Verfahren bei Temperaturen von 60 bis 80 °C durchführt.

## Claims

1. Process for removing molybdenum from aqueous salt solutions by adsorbing it on manganese dioxide, which comprises contacting the salt solution with a bed of manganese dioxide ($MnO_2$) precipitated electrolytically and transformed into granular material.

2. Process as claimed in claim 1, wherein the $MnO_2$ has a particle size of 0.05 to 5 mm.

3. Process as claimed in claim 2, wherein the $MnO_2$ has a particle size of 0.5 to 2 mm.

4. Process as claimed in any of claims 1-3, wherein the salt solution has a pH-value of less than 4.

5. Process as claimed in claim 4, wherein the salt solution has a pH-value of 1 to 2.5.

6. Process as claimed in any of claims 1-5, wherein the bed of $MnO_2$, once its adsorptive capacity is exhausted, is regenerated by draining off the salt solution and then treating the bed with an aqueous alkaline solution, the molybdenum adsorbed being ultimately removed therefrom.

7. Process as claimed in claim 6, wherein the bed is regenerated with the use of a sodium hydroxide solution which has the concentration necessary for the solution obtained after adjustment of the desorption equilibrium to still contain at least 2 weight %, preferably at least 5 weight % free sodium hydroxide solution.

8. Process as claimed in any of claims 1-7, carried out at temperatures of 20° to 95 °C.

9. Process as claimed in claim 8, carried out at temperatures of 60° to 80 °C.

## Revendications

1. Procédé d'élimination de molybdène de solutions salines aqueuses par adsorption sur le bioxyde de manganèse, caractérisé en ce que l'on met la solution saline en contact avec un lit de bioxyde de manganèse ($MnO_2$) précipité électrolytiquement et mis sous forme granulée.

2. Procédé selon la revendication 1, caractérisé en ce que le $MnO_2$ présente une granulométrie de 0,05-5 mm.

3. Procédé selon la revendication 2, caractérisé en ce que le $MnO_2$ présente une granulométrie de 0,5-2 mm.

4. Procédé selon l'une des revendications 1 à 3, caractérisé en ce que la solution saline présente un pH inférieur à 4.

5. Procédé selon la revendication 4, caractérisé en ce que la solution saline présente un pH de 1-2,5.

6. Procédé selon l'une des revendications 1 à 5, caractérisé en ce qu'après épuisement de sa capacité d'adsorption on régénère le lit de $MnO_2$ en le traitant, après avoir fait écouler la solution saline, par une solution alcaline aqueuse et le débarrassant ainsi du molybdène adsorbé.

7. Procédé selon la revendication 6, caractérisé en ce que l'on régénère le lit par une lessive de soude d'une concentration telle qu'après établissement de l'équilibre de désorption la solution formée contienne encore au moins 2 % en poids, de préférence au moins 5 % en poids, de soude caustique libre.

8. Procédé selon l'une des revendications 1-7, caractérisé en ce qu'on le met en œuvre à des températures de 20-95 °C.

9. Procédé selon la revendication 8, caractérisé en ce qu'on le met en œuvre à des températures de 60-80 °C.